# EUROPÄISCHE PATENTSCHRIFT

(11) **EP 3 258 562 B1**
(45) Veröffentlichungstag und Bekanntmachung des Hinweises auf die Patenterteilung: **27.03.2019**
(21) Anmeldenummer: 16305709.4
(22) Anmeldetag: 13.06.2016
(51) Int. Cl.: H02G 15/34, H01B 12/02

(54) **VERFAHREN ZUM AUFBAU EINER ÜBERTRAGUNGSSTRECKE FÜR ELEKTRISCHE ENERGIE**
METHOD FOR ESTABLISHING A TRANSMISSION PATH FOR ELECTRICAL ENERGY
PROCEDE DE CONSTRUCTION D'UNE VOIE DE TRANSMISSION POUR L'ENERGIE ELECTRIQUE

(43) Veröffentlichungstag der Anmeldung: 20.12.2017
(73) Patentinhaber: Nexans, 92400 Courbevoie (FR)
(72) Erfinder: STEMMLE, Mark, 30175 Hannover (DE); LANGE, Stephan, 30900 Wedemark (DE)
(74) Vertreter: Feray, Valérie

(56) Entgegenhaltungen:
- EP-A1- 1 720 176
- EP-A1- 2 693 584
- EP-A2- 1 480 231
- US-A1- 2010 285 968
- HAMABE M ET AL: "Cooling cycle test of DC superconducting power transmission cable", JOURNAL OF PHYSICS: CONFERENCE SERIES, INSTITUTE OF PHYSICS PUBLISHING, BRISTOL, GB, Bd. 234, Nr. 3, 22. Juli 2010 (2010-07-22) , Seite 32019, XP020193591, ISSN: 1742-6596, DOI: 10.1088/1742-6596/234/3/032019
- MASASHI YAGI ET AL: "Successful Field Tests of the World's Longest 500-m High-Tc Superconducting Power Cable", FURUKAWA REVIEW, Bd. 28, 1. Januar 2005 (2005-01-01), Seiten 53-60, XP055325376,

## Beschreibung

Die Erfindung bezieht sich auf ein Verfahren zum Aufbau einer Übertragungsstrecke für elektrische Energie gemäß dem Oberbegriff des Patentanspruchs 1.

Ein solches Verfahren geht beispielsweise aus der EP 2 693 584 A1 hervor.

Feststehende Teile der Übertragungsstrecke können Endenabschlüsse oder Verbindungsmuffen sein, durch welche zwei aus Kryostat und Kabel bestehende Längen der Übertragungsstrecke miteinander verbunden werden. Ein solcher Kryostat besteht aus zwei Rohren, die durch eine Abstandshalterung voneinander getrennt sind. Sie sind dadurch konzentrisch zueinander angeordnet. Das Wort "konzentrisch" gilt dabei auch für einen Aufbau des Kryostats, in dem die beiden Rohre - bedingt durch Fertigungsungenauigkeiten - nicht exakt parallel zueinander verlaufen.

Ein supraleitfähiges Kabel hat mindestens einen elektrischen Leiter aus einem Material, das bei ausreichend tiefen Temperaturen in den supraleitfähigen Zustand übergeht. Geeignete supraleitfähige Materialien sind beispielsweise oxidische Materialien auf Basis seltener Erden (ReBCO), insbesondere YBCO (Yttrium-Barium-Kupfer-Oxid), oder BSCCO (Wismut-Strontium-Kalzium-Kupfer-Oxid). Ausreichend niedrige Temperaturen, um ein derartiges Material in den supraleitfähigen Zustand zu bringen, liegen beispielsweise zwischen 67 K und 110 K. Es gibt aber auch supraleitfähige Materialien, wie beispielsweise Magnesiumdiborid, die auf noch tiefere Temperaturen abgekühlt werden müssen, wenn sie in den supraleitfähigen Zustand übergehen sollen. Geeignete Kühlmittel für all diese Materialien sind beispielsweise Stickstoff, Helium, Neon und Wasserstoff oder Gemische dieser Stoffe. Beim Betrieb einer Anordnung mit mindestens einem supraleitfähigen Kabel wird dasselbe also innerhalb des Kryostats erheblich - von Raumtemperatur auf Betriebstemperatur - abgekühlt, wodurch es infolge thermischer Kontraktion kürzer wird. Um die Funktionsfähigkeit der Übertragungsstrecke zu gewährleisten, müssen Vorkehrungen getroffen werden, durch welche die Verkürzung des Kabels ausgeglichen werden kann.

Bei dem Verfahren nach der EP 1 720 176 B1 wird ein supraleitfähiges Kabel in einem Kryostat so angebracht, dass es bei Raumtemperatur in Form einer Welle oder Wendel verläuft. Die dadurch gegenüber dem Kryostat erzielte Überlänge des Kabels wird durch ein kreuzartiges Netzwerk stabilisiert, das punktweise mit dem Kabel verbunden wird.

Die EP 1 480 231 A2 und die US 2010/285968 A1 offenbaren Anordnungen, die es erlauben bei Raumtemperatur eine Überlange eines supraleitfähigen Kabels in einen Kryostat einzubringen.

Aus der EP 1 617 537 B1 geht ein Verfahren zum Aufbau einer Anordnung mit einem in einem Kryostat verlegten supraleitfähigen Kabel hervor, das mit einem Endenabschluß verbunden ist. Der Endenabschluß wird mit einem elektrischen Leiter ausgerüstet, der mit einem rohrförmigen, radial federnde Lamellen aufweisenden Bauteil aus elektrisch leitendem Werkstoff bestückt wird, in welchem der Leiter des supraleitfähigen Kabels im Montagezustand eingebracht wird. Im Falle von thermisch bedingten Längenänderungen kann der Leiter des supraleitfähigen Kabels in seiner Längsrichtung in dem rohrförmigen Bauteil gleiten.

Die eingangs erwähnte EP 2 693 584 A1 betrifft eine Anordnung mit mindestens einem supraleitfähigen Kabel und einem dasselbe umgebenden Kryostat, bei der in den Kryostat zwei Faltenbälge eingebaut sind, zwischen denen ein gebogen verlaufendes Rohrstück angebracht ist. Die Faltenbälge sollen vorzugsweise symmetrisch zum Rohrstück liegen, das dazu um 180°, zumindest aber um etwa 180°, gebogen ist. Das im Kryostat angeordnete Kabel wird beim Betrieb der Anordnung abgekühlt und dadurch kürzer. Es legt sich dabei an die Wandung des Rohrstücks an und zieht dasselbe in eine Richtung, in welcher die Faltenbälge zusammengedrückt werden.

Der Erfindung liegt die Aufgabe zugrunde, das eingangs geschilderte Verfahren zum Aufbau einer Übertragungsstrecke für elektrische Energie zu vereinfachen und die thermische Kompensation des bei demselben eingesetzten supraleitfähigen Kabels zu verbessern.

Diese Aufgabe wird entsprechend den kennzeichnenden Merkmalen des Patentanspruchs 1 gelöst.

Der Rohrkörper kann in gebogener Form, in welcher er um einen Winkel von mindestens 180° gebogen ist, mit Vorteil in einer Werkstatt vorgefertigt werden. Er kann dann als einteiliges Bauteil zu einem Montageort transportiert und dort mit dem das supraleitfähige Kabel umgebenden Kryostat einer Übertragungsstrecke für elektrische Energie verbunden werden. Durch seine gebogene Form nimmt der Rohrkörper am Montageort relativ wenig Raum ein. Das ist insbesondere dann von Vorteil, wenn der Kryostat und das Kabel an eine Verbindungsmuffe angeschlossen werden sollen, die zum Verbinden mit einem weiterführenden Kryostat mit umschlossenem Kabel dient, weil dort in einer Baugrube in der Regel nur wenig Platz zur Verfügung steht. Das zumindest in der Nähe der Wandung des inneren Rohres des Rohrkörpers, die entsprechend dem größeren Biegeradius gebogen ist, verlegte Kabel kann sich bei Abkühlung und der damit verbundenen Kontraktion innerhalb des Rohrkörpers bewegen. Es liegt in der Ausgangsstellung bei Raumtemperatur mit größtem Biegeradius "außen" im Rohrkörper und es wird mit entsprechender Verkürzung seiner Länge im Rohrkörper nach "innen" bewegt, das heißt in Richtung der Wandung des inneren Rohres mit dem kleineren Biegeradius. Dabei wird auch die Verkürzung des supraleitfähigen Kabels in seiner Achsrichtung innerhalb des Kryostats ausgeglichen.

Mit Vorteil wird das supraleitfähige Kabel bei seiner Montage im Rohrkörper so angeordnet, dass es an der Wandung des inneren Rohres desselben, die mit dem größeren Biegeradius gebogen ist, direkt anliegt. Die Montage wird dadurch vereinfacht und es steht dann der maximale Raum für die Bewegung des Kabels im Rohrkörper zur Verfügung.

Der Winkel, um den der Rohrkörper gebogen ist, hängt von der Länge der Übertragungsstrecke ab. So gilt der Winkel von 180° beispielsweise für eine 150 m lange Übertragungsstrecke. Bei einer 300 m langen Übertragungsstrecke kann der Winkel beispielsweise bei 360° liegen. Ein Winkel von 540° ist mit Vorteil bei einer 450 m langen Übertragungsstrecke sinnvoll.

Das Verfahren nach der Erfindung wird anhand der Zeichnungen als Ausführungsbeispiel erläutert.

Es zeigen:
Fig. 1 in schematischer Darstellung eine für den Einsatz des Verfahrens nach der Erfindung geeignete Anordnung.
Fig. 2 einen Schnitt durch Fig. 1 längs der Linie II - II in vergrößerter Darstellung.
Fig. 3 einen in der Anordnung nach Fig. 1 einsetzbaren Rohrkörper.
Fig. 4 eine gegenüber Fig. 3 abgewandelte Ausführungsform eines Abschnitts des Rohrkörpers.
Fig. 5 und 6 schematisch weitere Ausführungsformen des Rohrkörpers.

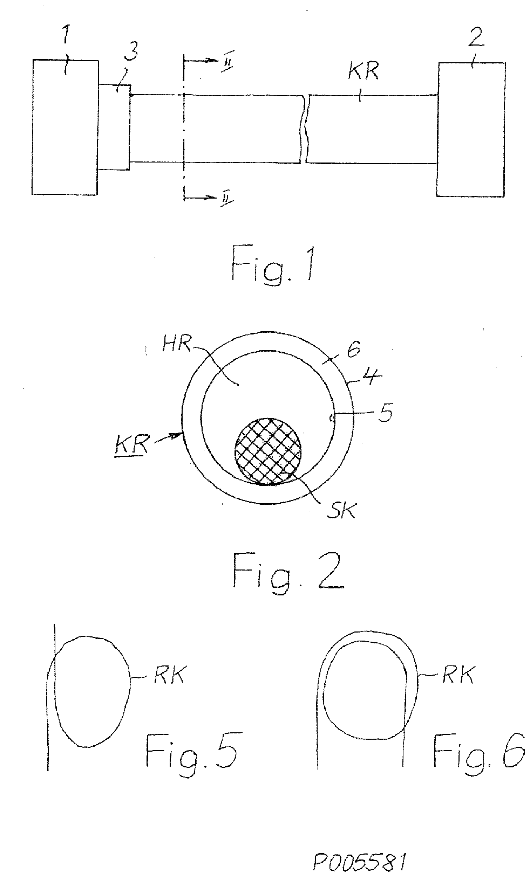

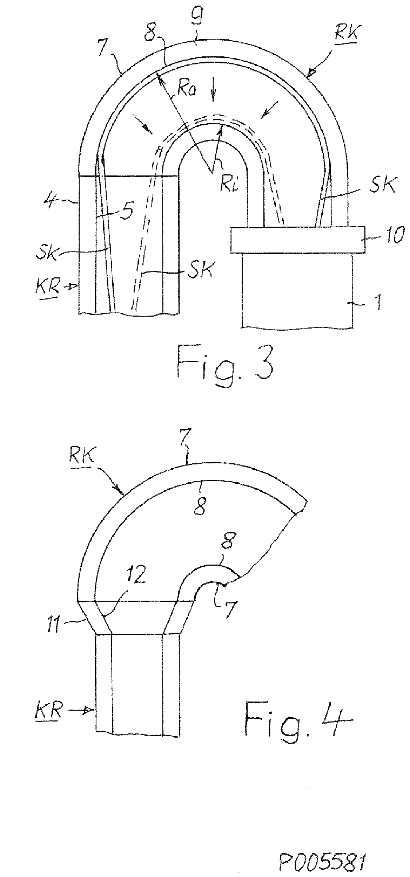

In Fig. 1 sind als feststehende Teile einer Übertragungsstrecke für elektrische Energie zwei Endenabschlüsse 1 und 2 schematisch dargestellt. Derartige Endenabschlüsse sind bekannt, so dass auf ihren Aufbau nicht genauer eingegangen wird. An die beiden Endenabschlüsse 1 und 2 sind ein Kryostat KR und ein in demselben befindliches supraleitfähiges Kabel SK (Fig. 2) fest angeschlossen. Zumindest einer der Endenabschlüsse 1 oder 2 könnte auch eine Verbindungsmuffe sein. Zwischen dem Endenabschluß 1 und dem Kryostat KR ist in dem in Fig. 1 dargestellten Ausführungsbeispiel ein durch ein Kästchen 3 angedeuteter Rohrkörper RK vorhanden, dessen Aufbau und Funktionsweise anhand der Fig. 3 bis 6 erläutert wird.

Der Kryostat KR besteht gemäß Fig. 2 aus zwei koaxial und mit Abstand zueinander angeordneten Rohren aus Metall, einem äußeren Rohr 4 und einem inneren Rohr 5 zwischen denen eine Abstandshalterung und eine Vakuumisolierung 6 angeordnet sind. Die Rohre 4 und 5 bestehen mit Vorteil aus Edelstahl. Sie können quer zu ihrer Längsrichtung gewellt und damit gut biegbar sein. Der Kryostat KR umschließt neben dem Kabel SK einen Hohlraum HR, durch welchen ein Kühlmittel geleitet werden kann. Der Aufbau des supraleitfähigen Kabels SK ist beliebig. Es können auch zwei oder mehr supraleitfähige Kabel in dem Kryostat KR untergebracht sein.

In Fig. 3 ist schematisch ein um 180° gebogener Rohrkörper RK dargestellt, der an einem Ende mit dem Kryostat KR und am anderen Ende mit dem wieder nur schematisch angedeuteten Endenabschluß 1 verbunden ist. Der Rohrkörper RK besteht ebenso wie der Kryostat KR aus zwei konzentrisch zueinander angeordneten Rohren aus Metall, einem äußeren Rohr 7 und einem inneren Rohr 8. Zwischen den beiden Rohren 7 und 8 ist eine Vakuumisolierung 9 angebracht. Die Rohre 7 und 8 bestehen mit Vorteil aus Edelstahl. Sie können quer zu ihrer Längsrichtung gewellt sein. Die Rohre 7 und 8 können mit Vorteil aber auch als Glattrohre ausgeführt sein.

In Montageposition ist das äußere Rohr 7 des Rohrkörpers RK mit dem äußeren Rohr 4 des Kryostats KR fest und dicht verbunden. Sie sind beispielsweise miteinander verschweißt. Das gilt analog dazu auch für die inneren Rohre 8 und 5 von Rohrkörper RK einerseits und Kryostat KR andererseits. Die Rohre 7 und 8 des Rohrkörpers RK sind an dessen anderem Ende beispielsweise über eine Flanschverbindung 10 mit dem Endenabschluß 1 fest und dicht verbunden.

Das Verfahren nach der Erfindung wird für die Ausführungsform einer Anordnung nach Fig. 3 beispielsweise wie folgt durchgeführt:
Ein Kryostat KR mit einer Länge von etwa 150 m wird entlang einer Übertragungsstrecke so verlegt, dass sein eines Ende in der Nähe des Endenabschlusses 1 liegt. Das vom Kryostat KR umschlossene supraleitfähige Kabel SK ist in demselben mit Vorteil bereits im Herstellerwerk so angeordnet worden, dass es um eine vorgegebene Länge aus demselben herausragt. Es muß beim Transport des Kryostats KR zum Verlegeort durch eine geeignete Umhüllung vor mechanischen Beschädigungen geschützt werden. Die Länge des herausragenden Kabels SK richtet sich nach der Länge des Rohrkörpers RK und nach der für einen Endenabschluß oder eine Verbindungsmuffe benötigten Länge.

Vor dem geschilderten Verbinden von Rohrkörper RK und Kryostat KR wird das Kabel SK im Rohrkörper RK angebracht. Es ragt dann an dem mit dem Flansch 10 versehenen Ende des Rohrkörpers RK so weit aus demselben heraus, dass es an den Endenabschluß 1 angeschlossen werden kann. Dabei wird das Kabel SK im Rohrkörper RK mit Vorteil so angeordnet, dass es am inneren Rohr 8 desselben anliegt, und zwar an der Wandung desselben, die mit dem größeren Biegeradius Ra gebogen ist. Es liegt dann entsprechend Fig. 3 im vom Rohrkörper RK umschlossenen Raum so weit wie möglich außen. In dieser Position wird das Kabel SK auch mit dem Endenabschluß 1 verbunden. Das Kabel SK soll auf jeden Fall in unmittelbarer Nähe der erwähnten Wandung des inneren Rohres 8 des Rohrkörpers RK liegen.

Nach im geschilderten Sinne fertiggestellter Montage des Rohrkörpers RK mit darin liegendem supraleitfähigem Kabel SK wird ein Kühlmittel durch den Kryostat KR geleitet. Dadurch wird das Kabel SK abgekühlt. Seine Länge wird dabei um etwa 0,3 % verkürzt. Diese Verkürzung wirkt sich einerseits in axialer Richtung innerhalb des Kryostats KR aber auch auf die im Rohrkörper RK untergebrachte Länge des Kabels SK aus. Das Kabel SK kann sich bedingt durch die Verkürzung innerhalb des Rohrkörpers RK bewegen, und zwar in Richtung der in Fig. 3 eingezeichneten Pfeile nach "innen". Es kann in einer gestrichelt eingezeichneten, maximal erreichbaren Endposition an der Wandung des inneren Rohres 8 des Rohrkörpers RK anliegen, die mit dem kleineren Radius Ri gebogen ist. Auf diese Art und Weise wird der vom Rohrkörper RK umschlossene Raum ausgenutzt, um die Verkürzung des Kabels SK abzufangen, ohne dass dasselbe auf Zug beansprucht wird.

Der vom Rohrkörper RK umschlossene Raum ist dadurch vergrößert, dass die Rohre 7 und 8, aus welchen der Rohrkörper RK gebogen wird, einen größeren Durchmesser als die entsprechenden Rohre 4 und 5 des Kryostats KR haben.

Das ist in Fig. 4 angedeutet, in welcher nur der Übergang vom Kryostat KR zum Rohrkörper RK dargestellt ist. Zwischen den miteinander zu verbindenden Rohren sind im dargestellten Ausführungsbeispiel jeweils etwa konisch ausgeführte Übergangsstücke 11 und 12 angeordnet. Die Übergangsstücke 11 und 12 können auch eine andere geometrische Form haben. Sie sind in der Endposition mit den Rohren 4 und 5 des Kryostats KR sowie den Rohren 7 und 8 des Rohrkörpers RK fest verbunden, vorzugsweise verschweißt.

Das Verfahren nach der Erfindung ist im Vorangehenden für einen 150 m langen Kryostat KR beschrieben, für den ein um 180° gebogener Rohrkörper RK ausreicht. Bei einem längeren Kryostat mit einem entsprechend längeren Kabel SK muß auch die Länge des Rohrkörpers RK verlängert werden, damit ein größerer Raum zur Bewegung des Kabels SK zur Verfügung steht. Der Rohrkörper RK kann beispielsweise durch einen um 90° gebogenen Rohrkörper verlängert werden oder auch um einen ein geradzahliges Vielfaches von 90° betragenden Rohrkörper.

Ein für einen 300 m langen Kryostat KR geeigneter Rohrkörper RK ist beispielsweise um 360° gebogen. Das ist in Fig. 5 schematisch dargestellt, in welcher nur eine Linie eingezeichnet ist, die dem aus den Rohren 7 und 8 bestehenden Rohrkörper RK entspricht. Ein weiter verlängerter Rohrkörper RK ist ebenso schematisch in Fig. 6 dargestellt. Er ist um 540° gebogen und kann mit Vorteil für einen 450 m langen Kryostat KR eingesetzt werden.

Der Rohrkörper RK kann in allen beschriebenen Ausführungsformen aus vorgefertigten Teilen zusammengesetzt werden, die jeweils um 90° gebogen sind. Diese Teile werden miteinander verschweißt. Das kann bereits in einem Herstellerwerk, mit Vorteil aber am Montageort durchgeführt werden.

## Patentansprüche

1. Verfahren zum Aufbau einer Übertragungsstrecke für elektrische Energie, bei welchem mindestens ein supraleitfähiges Kabel und ein dasselbe umgebender Kryostat eingesetzt werden, der aus zwei konzentrisch zueinander angeordneten Rohren aus Metall besteht, einem äußeren Rohr und einem inneren Rohr, zwischen denen eine Vakuumisolierung angebracht ist, bei welchem zumindest an einem Ende des Kryostats (KR) ein gebogen verlaufender Rohrkörper (RK) lückenlos mit demselben verbunden wird, der ebenfalls aus zwei konzentrisch zueinander angeordneten Rohren aus Metall besteht, einem äußeren Rohr (7) und einem inneren Rohr (8), zwischen denen eine Vakuumisolierung (9) angebracht ist, bei welchem der Rohrkörper (RK) im Montagezustand mit seinem freien Ende ebenso wie das von demselben umschlossene supraleitfähige Kabel (SK) an ein feststehendes Teil der Übertragungsstrecke angeschlossen wird und bei welchem durch den Kryostat zur Überführung des Kabels in den supraleitfähigen Zustand ein Kühlmittel geleitet wird, **dadurch gekennzeichnet,**
- **dass** ein Rohrkörpers (RK) verwendet wird, der um einen Winkel von mindestens 180° gebogen ist und der fest und dicht mit dem Kryostat (KR) verbunden wird,
- **dass** für die Herstellung des Rohrkörpers (RK) Rohre (7,8) verwendet werden, die einen größeren Durchmesser als die entsprechenden Rohre (4,5) des Kryostats (KR) haben, und
- **dass** das aus dem Kryostat (KR) herausragende supraleitfähige Kabel (SK) bei Raumtemperatur derart in dem Rohrkörper (RK) angeordnet wird, dass es zumindest in unmittelbarer Nähe der den größeren Biegeradius (Ra) aufweisenden Wandung des inneren Rohres (8) verläuft.

2. Verfahren nach Anspruch 1, **dadurch gekennzeichnet, dass** der Rohrkörper (RK) in einem Herstellerwerk vorgefertigt, zu einem Montageort transportiert und dort mit dem Kryostat (KR) fest und dicht verbunden wird.

3. Verfahren nach Anspruch 1 oder 2, **dadurch gekennzeichnet, dass** das supraleitfähige Kabel (SK) so im Rohrkörper (RK) angeordnet wird, dass es bei Raumtemperatur an der Wandung des inneren Rohrs (8) desselben anliegt, das mit dem größeren Biegeradius (Ra) gebogen ist.

## Claims

1. A method for establishing a transmission path for electrical energy, in which at least one superconductive cable and a cryostat surrounding the same are used, which consist of two tubes made of metal arranged concentrically to one another, an outer tube and an inner tube, between which a vacuum insulation is applied, in which at least at one end of the cryostat (KR) a tubular body (RK) extending in a bent manner is connected without gaps with the same, which also consists of two tubes made of metal arranged concentrically to one another, an outer tube (7) and an inner tube (8), between which a vacuum insulation (9) is applied, in which the tubular body (RK) in the assembled state with its free end as well as the superconductive cable (SK) surrounded by the same is connected to a stationary part of the transmission path and in which a coolant is passed through the cryostat in order to transition the cable into the superconductive state, **characterized in**
- **that** a tubular body (RK) is used, which is bent at an angle of at least 180° and which is connected firmly and tightly to the cryostat (KR),
- **that** for the production of the tubular body (RK) tubes (7, 8) are used, which have a larger diameter than the corresponding tubes (4, 5) of the cryostat, and
- **that** the superconductive cable (SK) projecting out of the cryostat (KR) is arranged at room temperature in the tubular body (RK) in such a manner that it extends at least in the immediate vicinity of the wall of the inner tube (8) having the larger bending radius (Ra).

2. A method according to Claim 1, **characterized in that** the tubular body (RK) is pre-fabricated in a manufacturing plant, transported to an assembly site and connected there firmly and tightly to the cryostat (KR).

3. A method according to Claim 1 or 2, **characterized in that** the superconductive cable (SK) is arranged in the tubular body (RK) such that at room temperature it abuts against the wall of the inner tube (8) of the same, which is bent at the larger bending radius (Ra).

## Revendications

1. Procédé de construction d'une voie de transmission pour énergie électrique, dans lequel au moins un câble supraconducteur et un cryostat entourant celui-ci sont utilisés, qui est constitué de deux tubes métalliques disposés de manière concentrique entre eux, d'un tube externe et d'un tube interne, entre lesquels une isolation sous vide est prévue, dans lequel, au moins à une extrémité du cryostat (KR), un corps tubulaire (RK) à extension courbe est relié avec celui-ci de manière ininterrompue, qui est constitué également de deux tubes métalliques disposés de manière concentrique entre eux, d'un tube externe (7) et d'un tube interne (8), entre lesquels est prévue une isolation sous vide (9), dans lequel le corps tubulaire (RK) est raccordé, dans l'état de montage, avec son extrémité libre ainsi que le câble supraconducteur (SK) entouré par celui-ci, à une partie fixe de la voie de transmission et dans lequel un moyen de refroidissement est conduit à travers le cryostat afin de mettre le câble dans un état supraconducteur, **caractérisé en ce que**
- un corps tubulaire (RK) est utilisé, qui est plié d'un angle d'au moins 180° et qui est relié de manière étanche avec le cryostat (KR),
- pour la fabrication du corps tubulaire (RK), des tubes (7, 8) sont utilisés, qui présentent un diamètre supérieur à celui des tubes correspondants (4, 5) du cryostat (KR) et
- le câble supraconducteur (SK) dépassant du cryostat (KR) est disposé, à température ambiante, dans le corps tubulaire (RK), de façon à ce qu'il s'étende au moins à proximité immédiate de la paroi du tube interne (8) présentant le rayon de courbure (Rα) le plus élevé.

2. Procédé selon la revendication 1, **caractérisé en ce que** le corps tubulaire (RK) est préfabriqué dans une usine de fabrication, transporté sur un site de montage et y est relié de manière ferme et étanche avec le cryostat (KR).

3. Procédé selon la revendication 1 ou 2, **caractérisé en ce que** le câble supraconducteur (SK) est disposé dans le corps tubulaire (RK) de façon à ce que, à température ambiante, il s'appuie contre la paroi du tube interne (8) de celui-ci, qui est courbée avec le rayon de courbure (Ra) le plus élevé.
